# EUROPEAN PATENT APPLICATION

(11) **EP 4 617 407 A1**
(43) Date of publication of application: **17.09.2025**
(21) Application number: 23888352.4
(22) Date of filing: 19.09.2023
(51) Int. Cl.: C25D 5/14, C25D 5/16, C25D 5/48, C25D 5/54

(54) **CHROMIUM PLATED COMPONENT AND METHOD FOR PRODUCING SAME**

(30) Priority: 11.11.2022 JP 2022181191
(71) Applicant: JCU Corporation, Tokyo 1100015 (JP)
(72) Inventor: NAKAGAMI, Madoka, Kawasaki-shi, Kanagawa 215-0033 (JP); NISHIKAWA, Kenichi, Kawasaki-shi, Kanagawa 215-0033 (JP)
(74) Representative: Ter Meer Steinmeister & Partner
(86) International application number: PCT/JP2023/033941
(87) International publication number: WO 2024/100998

(57) **Abstract**

The purpose of the present invention is to provide: a chromium plated component which exhibits excellent corrosion resistance even if an upper layer is composed of a trivalent chromium plating layer, while having good appearance; and a production method which is capable of producing such a chromium plated component.

Provided is a chromium plated component comprising a substrate having a surface layer of copper or a copper alloy; a glossy nickel plating layer formed on the surface layer of the substrate; a noble potential nickel plating layer formed on the glossy nickel plating layer and having an electric potential that is more electropositive than the electric potential of the glossy nickel plating layer by 30 mV to 180 mV; and a trivalent chromium plating layer formed on the noble potential nickel plating layer. It is preferable that the film thickness ratio of the glossy nickel plating layer to the noble potential nickel plating layer is 1:30 to 10:1. It is also preferable that the noble potential nickel plating layer does not contain non-conductive fine particles.

## Description

### TECHNICAL FIELD

The present invention relates to a chromium-plated part, specifically a nickel chromium-plated part, and a method for manufacturing the same.

### BACKGROUND ART

Traditionally, chromium plating has been used for purposes such as decorative covering of substrates, providing corrosion resistance for substrates, and providing electrical conductivity for substrates. Chromium plating usually provides silvery-white appearance and thus provides useful and beautiful, decorative coatings. The chromium plating layer has self-passivation ability and thus can form a passivation film on its surface, which provides high corrosion resistance. Specifically, resin-based products with chromium-plated surfaces are lighter and less expensive than metal-based products and thus are used for a variety of parts, including automotive parts.

Some chromium-plated parts (products) have a nickel plating layer as a foundation (nickel chromium-plated products). Such products have particularly high decorative performance and corrosion resistance. Such chromium-nickel plating is used on a variety of substrates including resins. The high corrosion resistance of nickel-chromium plating is considered due to the sacrificial corrosion of the underlying nickel layer, which prevents the corrosion of the chromium plating layer.

In the nickel chromium-plated product, the nickel film can have improved corrosion resistance when it has a two- or three-layer structure including a combination of: a semi-bright nickel plating layer substantially free of sulfur; a sulfur-containing, bright nickel plating layer; and optionally a nickel plating layer with another composition (see, for example, Patent Documents 1 to 4). In such a structure, the bright nickel plating layer has a lower electric potential and thus can undergo sacrificial corrosion to provide improved corrosion resistance. Chromium-plated parts with such a nickel plating layer can have higher corrosion resistance. These days, there has been an increasing demand for higher corrosion resistance for chromium-plated parts, and measures for further improvement in corrosion resistance, such as underlying nickel plating layer structures, have been investigated.

For example, Patent Documents 1 and 2 disclose a nickel chromium-plated product including: a base; a stack of a semi-bright nickel plating layer, a bright nickel plating layer, and a co-deposition nickel plating layer, which are provided in this order on the base; and a chromium plating layer provided on the stack. In this structure, the co-deposition nickel plating layer is a layer that contains fine particles of silica or any other material co-deposited with nickel and has a microporous structure. In such a product, many pores can disperse corrosion current and thus protect the bright nickel plating layer from corrosion. The inventions described in Patent Documents 1 and 2 will respectively improve corrosion resistance by adjusting the electric potential difference between the nickel plating layers and by forming the nickel plating layers with different concentrations of high electrode potential metal ions.

Patent Document 3 discloses a surface modification method that includes oxidizing the surface of a chromium-plated part with a structure similar to that disclosed in Patent Documents 1 and 2 to form a chromium oxide film on the surface of the chromium plating film. Patent Document 4 discloses a chromium-plated part including: a resin substrate; and a copper plating, a sulfur-free nickel plating (semi-bright nickel plating), a bright nickel plating, a noble-potential nickel plating, and a trivalent chromium plating with a microporous or microcrack structure, which are provided in this order on the resin substrate. Patent Document 4 also discloses, as the noble-potential nickel plating, a co-deposition nickel plating with a microporous structure (MP nickel plating). The inventions of Patent Documents 3 and 4 provide techniques to form a modified chromium plating layer for the production of plated parts with improved corrosion resistance. In both of these inventions, the nickel plating film has a three-layer structure with a semi-bright nickel plating layer provided as the lowermost layer.

### Citation List

### Patent Document

Patent Document 1: Japanese Unexamined Patent Application, Publication No. H5-171468
Patent Document 2: Japanese Unexamined Patent Application, Publication No. H6-146069
Patent Document 3: Japanese Unexamined Patent Application, Publication No. 2007-275750
Patent Document 4: Japanese Unexamined Patent Application, Publication No. 2010-185116

### DISCLOSURE OF THE INVENTION

### Problems to be Solved by the Invention

Unfortunately, chromium-plated parts with an underlying nickel layer still have room for improvement in terms of corrosion resistance. In recent years, in consideration of the environment, trivalent chromium plating is often used instead of hexavalent chromium plating, but trivalent chromium plating on a nickel plating layer does not necessarily provide the same level of corrosion resistance as hexavalent chromium plating. Both Patent Documents 1 and 2 disclose the production of plated products using hexavalent chromium plating. If trivalent chromium plating is used instead in such production, the resulting chromium plating layer may have insufficient corrosion resistance. Moreover, the invention described in Patent Document 3 including a method of passivating the surface of a chromium plating layer may require processes and equipment for surface oxidation, which may lead to an increase in manufacturing cost.

In the invention described in Patent Document 4, it will be generally difficult to obtain sufficient corrosion resistance unless non-conductive fine particles are used to form a microporous structure in a trivalent chromium plating layer.

In addition, many nickel-chromium plated products have a three-layer nickel plating structure (the plated products described in Patent Documents 2 and 4 essentially having two types of nickel plating layers also have such a structure), in which a semi-bright nickel plating layer (sulfur-free nickel plating layer) is provided on the base side. The present inventors have found that such a structure has room for further improvement in terms of corrosion resistance.

It is an object of the present invention to provide a solution to the problems described above and to provide a chromium-plated part that has high corrosion resistance and good appearance even when provided with a trivalent chromium plating layer as an upper layer; and a method for manufacturing such a chromium-plated part.

### Means for Solving the Problems

The present inventors have completed the present invention based on findings that a chromium-plated part with high corrosion resistance and good appearance can be provided by trivalent chromium plating in which a bright nickel plating layer is formed directly on a coppery base, a noble-potential nickel plating layer is formed directly on the bright nickel plating layer, a trivalent chromium plating layer is formed directly on the noble-potential nickel plating layer, and the bright nickel plating layer and the noble-potential nickel plating layer have a specific electric potential difference between them.

Specifically, the present invention provides aspects (1) to (9) below.
(1) A chromium-plated part including: a base having a surface layer including copper or a copper alloy; a bright nickel plating layer formed on the surface layer of the base; a noble-potential nickel plating layer formed on the bright
   nickel plating layer and having an electric potential 30 to 180 mV higher than that of the bright nickel plating layer;
   and a trivalent chromium plating layer formed on the noble-potential nickel plating layer.
(2) The chromium-plated part according to aspect (1), wherein the chromium-plated part has a thickness ratio of the bright nickel plating layer to the noble-potential nickel plating layer of 1:30 to 10:1.
(3) The chromium-plated part according to aspect (1), wherein the chromium-plated part has a thickness ratio of the bright nickel plating layer to the noble-potential nickel plating layer of 1:5 to 9:1.
(4) The chromium-plated part according to any one of aspects (1) to (3), wherein the bright nickel plating layer and the noble-potential nickel plating layer have a total thickness of 1 to 30 µm.
(5) The chromium-plated part according to any one of aspects (1) to (4), further including an electrolytic-chemical conversion coating and/or an immersion-chemical conversion coating on the trivalent chromium plating layer.
(6) The chromium-plated part according to any one of aspects (1) to (5), wherein the noble-potential nickel plating layer is free of non-conductive fine particles.
(7) The chromium-plated part according to any one of aspects (1) to (6), wherein the base is a substrate including one or more materials selected from the group consisting of a resin, a ceramic, and a metal, with the surface layer comprising copper or a copper alloy, or a substrate comprising copper or a copper alloy.
(8) A method for manufacturing a chromium-plated part, the method including: forming a bright nickel plating layer on a surface layer of a base, the surface layer including copper or a copper alloy; forming a noble-potential nickel plating layer on the bright nickel plating layer, the noble-potential nickel plating layer having an electric potential 30 to 180 mV higher than that of the bright nickel plating layer; and forming a trivalent chromium plating layer on the noble-potential nickel plating layer.
(9) The method according to aspect (8), further including forming an electrolytic-chemical conversion coating and/or an immersion-chemical conversion coating on a surface of the trivalent chromium plating layer.

### Effects of the Invention

Despite having a trivalent chromium plating layer as an upper layer, the chromium-plated part of the present invention has high corrosion resistance and good appearance. The method of the present invention for manufacturing a chromium-plated part can provide a chromium-plated part having high corrosion resistance and good appearance.

### BRIEF DESCRIPTION OF THE DRAWINGS

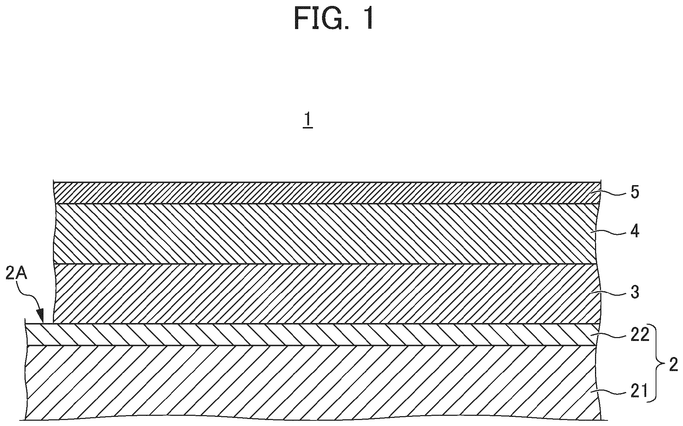

FIG. 1 is a schematic cross-sectional view of a chromium-plated part according to an embodiment of the present invention.

### PREFERRED MODE FOR CARRYING OUT THE INVENTION

Hereinafter, the present invention will be described with reference to embodiments, which are not intended to limit the present invention.

### Chromium-Plated Part

The present invention is directed to a chromium-plated part including: a base having a surface layer including copper or a copper alloy; a bright nickel plating layer formed on the surface layer of the base; a noble-potential nickel plating layer formed on the bright nickel plating layer and having an electric potential 30 to 180 mV higher than that of the bright nickel plating layer; and a trivalent chromium plating layer formed on the noble-potential nickel plating layer.

FIG. 1 is a schematic cross-sectional view of a chromium-plated part according to an embodiment of the present invention. As shown in FIG. 1, the chromium-plated part 1 according to an embodiment includes, in order, a base 2; a bright nickel plating layer 3 provided on and in contact with a surface 2A of the base 2; a noble-potential nickel plating layer 4 provided on and in contact with the bright nickel plating layer 3; and a trivalent chromium plating layer 5 provided on and in contact with the noble-potential nickel plating layer 4. Hereinafter, each of the elements of the chromium-plated part will be described.

### Base

In the chromium-plated part 1, the base 2 is an object having a surface 2A provided with the plating layers described below. The base 2 has a surface layer 22 including copper or a copper alloy at least on the surface 2A side on which the plating layers are provided.

Specifically, the base 2 includes a substrate 21 and the surface layer 22 including copper or a copper alloy. In the embodiment shown in FIG. 1, the base 2 is composed of different components including the substrate 21 and the surface layer 22. However, this is a non-limiting example, and alternatively, the base 2 may be a substrate 21 itself composed of copper or a copper alloy to have the surface layer 22 that is continued therefrom and is integrated therewith.

### Substrate

The substrate 21 corresponds to the main body of the base 2, which is the plating target. The substrate 21 may be made of any material with any shape. In the embodiment shown in FIG. 1, as a non-limiting example of the present invention, the chromium-plated part includes: a flat sheet-shaped base 2 including a substrate 21 and a surface layer 22 provided thereon; and plating layers 3, 4, and 5 provided on one side of the base 2**.** The substrate 21 may be any material with any shape and for any application, examples of which include automotive parts, such as wheels, grilles, moldings, and emblems, in various shapes, outboard motor parts, faucet fittings, building parts, such as doorknobs and window frames, and home appliance parts.

As a non-limiting example, the base 2 preferably includes: a substrate 21 including one or more materials selected from the group consisting of a resin, a ceramic, and a metal; and a surface layer 22 provided on the substrate 21 and including copper or a copper alloy. The substrate 21 may be a composite material including any combination of various resins, elastomers, ceramics, metals, and carbon materials. Alternatively, the substrate 21 itself may include copper or a copper alloy and form the base 2 without being provided with any surface layer as another component. In this case, the base 2 naturally has a surface layer including copper or a copper alloy. It should be noted that the phrase "including (comprising) copper or a copper alloy" as used herein means that the surface layer is composed mainly of copper or a copper alloy and is not intended to exclude the presence of a small amount of additives or the presence of unavoidable impurities.

The substrate 21 may include a metallic material. In such a case, the metallic material may have any composition. Examples of the metallic material include, but are not limited to, copper, copper alloys, nickel, nickel alloys, iron, stainless steel, and zinc. These metals may have undergone activation or strike plating for imparting adhesion properties as needed. When the substrate 21 is subjected to strike plating or any other treatment with copper or a copper alloy, the resulting treated substrate 21 may be directly used as the base 2 for the chromium-plated part 1.

The substrate 21 may include any type of resin. Examples of resin include, but are not limited to, ABS (acrylonitrile-butadiene-styrene resin), PC (polycarbonate), PC-containing ABS, SBS (styrene-butadiene-styrene copolymer), acrylic resin, polyolefin resin such as polypropylene and polyethylene, polyphenylene oxide, polyphenylene sulfide, polyacetal, polyamide, polyimide, polyester, polyvinyl acetate, polyurethane, epoxy resin, phenolic resin, CFRP (carbon fiber-reinforced plastic), and CNF (cellulose nanofiber)-containing resin. In particular, the substrate is preferably based on ABS resin. Such an ABS resin-based substrate can easily be subjected to plating for the formation of a copper or copper alloy surface layer and thus is suitable for use as the substrate for the chromium-plated part 1.

### Plating on Substrate

When made of a ceramic or a resin as mentioned above, the substrate 21 is preferably subjected to a metal treatment for making it electrically conductive so that it can be easily plated. The metal treatment for making it electrically conductive may be any of various methods, such as electroless plating, electrolytic plating, metal sputtering, and metal vapor deposition. In particular, the metal treatment is preferably electroless plating with copper, copper alloy, nickel, or nickel alloy. Such electroless plating may be performed using any suitable method and conditions, such as a commonly used method and conditions.

After being subjected to electroless plating, the substrate 21 is preferably subjected to electrolytic copper plating or electrolytic copper alloy plating (electrolytic copper-based plating). The electrolytic copper-based plating can form a surface layer 22 having particularly good properties, such as high adhesion properties. Even after electroless copper or copper alloy plating is performed to form a copper-based layer, electrolytic copper-based plating is preferably performed on the copper-based layer. The electrolytic copper-based plating may also be performed using any suitable method and conditions, such as a commonly used method and conditions. The process described above forms the surface layer 22 of the base 2.

### Surface Layer

In the base 2, the surface layer 22 may be provided on the surface of the substrate 21 or may correspond to an upper portion of the substrate 21. The surface layer 22 provides a surface on which the plating layers are to be formed as described below. The surface layer 22 includes copper or a copper alloy. A plating layer, specifically a bright nickel plating layer 3 as described below is formed in contact with the surface 2A of the surface layer 22 including copper or a copper alloy.

### Bright Nickel Plating Layer

In the chromium-plated part 1, a bright nickel plating layer 3 is provided on the base 2 and provided in contact with the surface layer 22 including copper or a copper alloy. In other words, the chromium-plated part 1 has the bright nickel plating layer 3 directly on the base 2 without any other layer, such as a semi-bright nickel layer, between them.

The bright nickel plating layer 3 may be a sulfur-containing nickel plating layer. The bright nickel plating layer 3 may be any type.

### Bright Nickel Plating

The bright nickel plating layer 3 can be formed by electroplating using a known nickel plating solution containing a primary brightening agent, such as an agent including a sulfur compound. Specifically, the nickel plating solution is typically, but not limited to, a Watts bath, a sulfamic acid bath, a citric acid bath, or a Weisberg bath.

Examples of the primary brightening agent for use in the nickel plating solution for forming the bright nickel plating layer 3 include sodium 1,5-naphthalenedisulfonate, sodium 1,6-naphthalenedisulfonate, sodium 2,5-naphthalenedisulfonate, sodium 1,3,6-naphthalenetrisulfonate, sodium benzene sulfonate, sodium benzene sulfinate, aromatic sulfonimides or sulfinic acids, such as o-sulfobenzimide (saccharin) sodium salt, and ethylenically unsaturated sulfonic acid salts, such as sodium vinyl sulfonate and sodium allyl sulfonate. One, two, or more of these brightening agents may be used alone or in combination.

The nickel plating solution may contain a brightening and leveling agent (secondary brightening agent) (for the purpose of brightening and leveling) in addition to or instead of the primary brightening agent. Examples of the brightening and leveling agent include acetylenically unsaturated alcohols and derivatives thereof, such as 1,4-butynediol, hexinediol, and propargyl alcohol, and sodium salts of pyridine sulfonic acid. One, two, or more of these agents may be used alone or in combination.

The primary brightening agent and the brightening and leveling agent (secondary brightening agent) may also be commercially available products, such as #81, #83, and #810 for use in HI-BRITE #88 Process (manufactured by JCU

### CORPORATION) .

The nickel plating solution may contain the primary brightening agent at a concentration of typically about 0.1 to about 10 g/L, preferably about 1 to about 5 g/L, more preferably about 1.5 to about 4 g/L. The nickel plating solution may also contain the brightening and leveling agent at a concentration of typically about 0.5 to about 300 ppm, preferably about 10 to about 200 ppm, more preferably about 20 to about 200 ppm.

The plating solution for use in bright nickel plating preferably contains a wetting agent. The wetting agent may be, for example, a surfactant. Examples of the surfactant include, but are not limited to, nonionic surfactants, such as polyethylene glycol, and anionic surfactants, such as sodium polyoxyethylene alkyl ether sulfate. One, two, or more of these surfactants may be used. The wetting agent may also be a commercially available product, such as #82, #82-A, or #82-K, for use in HI-BRITE #88 Process (manufactured by JCU CORPORATION). The nickel plating solution may contain the wetting agent at a concentration of typically about 10 to about 1,000 ppm, more preferably about 100 to about 500 ppm.

The bright nickel plating layer 3 may be formed under any suitable electroplating conditions, such as commonly used conditions. For example, the bright nickel plating layer 3 may be formed under conditions including a plating bath temperature of 40 to 60°C, preferably 45 to 55°C, and a current density of 1 to 10 A/dm², preferably 2 to 5 A/dm².

The process described above forms the bright nickel plating layer 3 in contact with the surface layer 22 of the base 2.

### Noble-Potential Nickel Plating Layer

In the chromium-plated part 1, the noble-potential nickel plating layer 4 having an electric potential 30 to 180 mV higher than that of the bright nickel plating layer 3 is provided in contact with the bright nickel plating layer 3. In other words, the chromium-plated part 1 has the noble-potential nickel plating layer 4 (with a specific electrochemical potential) directly on the bright nickel plating layer 3 and on the chromium plating layer 5 side without any other layer between the layers 3 and 4.

The noble-potential nickel plating layer 4 may be any type of nickel plating layer having an electric potential 30 to 180 mV higher than that of the bright nickel plating layer 3 and may have any suitable composition. The electrochemical potential of the nickel plating layer is not uniquely determined only by the content of each component in the layer. For example, the electrochemical potential of the nickel plating layer can be adjusted by using an electric potential adjusting agent or any other means to control the content of sulfur or carbon in the plating layer.

### Noble-Potential Nickel Plating

The noble-potential nickel plating layer 4 can be formed by electroplating using a known nickel plating solution containing desired amounts of a primary brightening agent or a brightening and leveling agent (secondary brightening agent) and a potential adjusting agent or the like.

Specifically, the noble-potential nickel plating layer 4 may be formed using a nickel plating solution containing the same primary or secondary brightening agent as that used in the nickel plating solution to form the bright nickel plating layer 3.

The nickel plating solution may also contain a known potential adjusting agent. Examples of such a potential adjusting agent include butynediol, hexinediol, propargyl alcohol, sodium allyl sulfate, formalin, chloral hydrate (2,2,2-trichloro-1,1-ethanediol), and bromal hydrate (2,2,2-tribromo-1,1-ethanediol).

The potential adjusting agent may also be a commercially available product, such as ADDITIVE-E (manufactured by JCU CORPORATION).

The noble-potential nickel plating layer 4 having an electric potential deference as defined above can be formed by plating using a nickel plating solution with appropriately controlled concentrations of the primary and secondary brightening agents and the potential adjusting agent.

Preferably, the nickel plating solution is free of non-conductive fine particles such as silica particles so that the noble-potential nickel plating layer 4 can be formed free of non-conductive fine particles. Even if non-conductive fine particles are used, the resulting noble-potential nickel plating layer 4 should preferably contain about at most 5 mass%, more preferably at most 1 mass% of the non-conductive fine particles based on the total mass of the noble-potential nickel plating layer 4. The noble-potential nickel plating layer 4 containing no non-conductive fine particles or about 5 mass% or less of non-conductive fine particles will provide better appearance for the chromium-plated part 1. The non-conductive fine particle-free nickel plating solution is easy to manage for plating and advantageous for simplifying the plating process. As used herein, the phrase "free of non-conductive fine particles" means that the solution or the layer does not contain any non-conductive fine particles other than unavoidable impurities. The phrase is intended to mean not only that the content of non-conductive fine particles is 0 but also that the content of non-conductive fine particles mixed in with the layer is at most about 0.1 mass%.

The noble-potential nickel plating layer 4 may be formed under any suitable electroplating conditions, such as commonly used conditions. For example, the noble-potential nickel plating layer 4 may be formed under conditions including a plating bath temperature of 40 to 60°C, preferably 45 to 55°C, and a current density of 1 to 10 A/dm², preferably 2 to 5 A/dm².

### Measurement of Electric Potential Difference

As mentioned above, the noble-potential nickel plating layer 4 has an electric potential 30 to 180 mV higher than that of the bright nickel plating layer 3. The noble-potential nickel plating layer 4 preferably has an electric potential 30 to 160 mV higher, more preferably 40 to 160 mV higher, even more preferably 60 to 120 mV higher, furthermore preferably 60 to 80 mV higher than that of the bright nickel plating layer 3.

Such an electric potential difference can be measured, for example, by the STEP test in accordance with ASTM B764: "Standard test method for simultaneous thickness and electrode potential determination of individual layers in multilayer nickel deposit". More specifically, the electric potential difference may be measured by a process including: removing the trivalent chromium plating layer 5 from the chromium-plated part 1 to form a sample (for measuring the electric potential difference); placing the sample and a silver-silver chloride reference electrode (reference electrode) in an electrolytic solution (at 20°C) containing 300 g/L of NiCl₂·6H₂O, 50 g/L of NaCl, and 25 g/L of H₃BO₃; and measuring the electric potential difference using a commercially available device, such as a multilayer nickel plating corrosion resistance meter.

As mentioned above, the chromium-plated part 1 includes the bright nickel plating layer 3 directly on the surface layer 22 of the base 2; and the noble-potential nickel plating layer 4 provided directly on the bright nickel plating layer 3 and on the chromium plating layer 5 side, in which the noble-potential nickel plating layer 4 has an electric potential 30 to 180 mV higher than that of the bright nickel plating layer 3. The chromium-plated part 1 with such features exhibits high corrosion resistance and good appearance.

The reason for the above advantage of the chromium-plated part 1 remains to be clarified and should not be bound to a specific theory. A first reason for that, however, may be that the bright nickel plating layer 3 with a lower electric potential can undergo sacrificial corrosion, which can suppress not only the corrosion reaction of the chromium plating layer 5 but also the corrosion reaction of the noble-potential nickel plating layer 4 under the chromium plating layer 5. A second reason may be that the bright nickel plating layer 3 in contact with the surface layer 22 of the base 2 is a low-potential bright nickel plating layer rather than a semi-bright nickel plating layer, which may also contribute to the advantage because the bright nickel plating layer 3 can undergo sacrificial corrosion to further suppress the corrosion of the adjacent surface layer 22 including copper or a copper alloy, so that the chromium-plated part 1 can have improved corrosion resistance as a whole.

### Thicknesses of Nickel Plating Layers and Thickness Ratio Therebetween

In the chromium-plated part 1, the nickel plating layers (the bright nickel plating layer 3 and the noble-potential nickel plating layer 4) may each have any suitable thickness depending on purpose, such as a thickness of 100 µm or less or a thickness of about 1 to about 50 µm. For higher corrosion resistance and for nickel plating cost reduction, the total thickness of the bright nickel plating layer 3 and the noble-potential nickel plating layer 4 (nickel film thickness) is preferably about 1 to about 30 µm**,** more preferably about 2 to about 20 µm**,** even more preferably about 5 to about 15 µm.

Moreover, the ratio of the thickness of the bright nickel plating layer 3 to the thickness of the noble-potential nickel plating layer 4 (the bright nickel plating layer 3 thickness : the noble-potential nickel plating layer 4 thickness) is preferably 1:30 to 10:1, more preferably 1:9 to 9:1. The chromium-plated part with such a feature tends to exhibit higher corrosion resistance. The chromium-plated part 1 with the thickness ratio falling within the range of 1:5 to 9:1, particularly within the range of 1:3 to 7:1 or 1:3 to 5:1 can maintain high corrosion resistance over a longer period.

It will be understood that the thickness ratio between the two nickel plating layers should not be limited to the value shown above and may be set to various values depending on purpose or application. Specifically, for enhanced advantage from the sacrificial corrosion of the bright nickel plating layer 3, the ratio of the thickness of the bright nickel plating layer 3 to the thickness of the noble-potential nickel plating layer 4 may be in the range of typically 1:2 to 7:1, preferably 1:1 to 5:1, more preferably 2:1 to 4:1. For reduced corrosion of the two nickel plating layers, the ratio of the thickness of the bright nickel plating layer 3 to the thickness of the noble-potential nickel plating layer 4 may also be in the range of typically 1:3 to 4:1, preferably 1:3 to 2:1.

### Trivalent Chromium Plating Layer

In the chromium-plated part 1, the trivalent chromium plating layer 5 is provided in contact with the noble-potential nickel plating layer 4. The trivalent chromium plating layer 5 provides high corrosion resistance and beautiful decorative properties for the plated part and makes the plated part useful for decorative applications and other applications.

The trivalent chromium plating layer 5 may be formed using any suitable method, such as a commonly used plating method under desired conditions. For example, the trivalent chromium plating layer 5 may be formed by electroplating using a known trivalent chromium plating solution containing a trivalent chromium compound, a complexing agent, a conductive salt, and a pH buffer.

The trivalent chromium plating solution for the formation of the trivalent chromium plating layer 5 may contain any suitable trivalent chromium compound. Examples of such a compound include basic chromium(III) sulfate (Cr(OH)SO₄), chromium(III) sulfate, chromium(III) chloride, chromium(III) sulfamate, and chromium(III) acetate. In particular, the trivalent chromium compound is preferably basic chromium sulfate and/or chromium sulfate. One, two, or more of these trivalent chromium compounds may be used alone or in combination. The trivalent chromium plating solution may contain about 1 to about 25 g/L of chromium metal from the chromium compound(s).

The complexing agent may be any type. Examples of the complexing agent include aliphatic monocarboxylic acids and salts thereof, such as formic acid, ammonium formate, and potassium formate; aliphatic dicarboxylic acids such as succinic acid, maleic acid, and malic acid, and salts thereof; aliphatic tricarboxylic acids and salts thereof, such as citric acid and triammonium citrate; carboxylic acids having two or more hydroxyl groups and two or more carboxy groups and salts thereof, such as tartaric acid, diammonium tartrate, and sodium tartrate; and amino carboxylic acids, such as glycine. One, two, or more of these complexing agents may be used alone or in combination. The trivalent chromium plating solution may contain, for example, about 0.1 to about 50 g/L of the complexing agent.

The conductive salt may also be any type. Examples of the conductive salt include sulfates, such as potassium sulfate, ammonium sulfate, and sodium sulfate; chlorides, such as potassium chloride, ammonium chloride, and sodium chloride; and sulfamates, such as potassium sulfamate, ammonium sulfamate, and sodium sulfamate. One, two, or more of these conductive salts may be used alone or in combination. The trivalent chromium plating solution may contain, for example, about 100 to about 500 g/L of the conductive salt.

The pH buffer agent may also be any type. Examples of the pH buffer include boric acid, sodium borate, potassium borate, phosphoric acid, and dipotassium hydrogen phosphate. One, two, or more of these pH buffers may be used alone or in combination. The trivalent chromium plating solution may contain, for example, about 25 to about 200 g/L of the pH buffer.

The trivalent chromium plating solution may further contain a blackening agent, such as sodium thiocyanate, methionine, or cysteine; ascorbic acid, sodium ascorbate, hydrogen peroxide, polyethylene glycol, a tin salt, such as tin sulfate or tin chloride, iron chloride, sodium saccharin, sodium allylsulfonate, or sodium vinylsulfonate.

The trivalent chromium plating solution containing the complexing agent, the conductive salt, and the pH buffer may be a commercially available product, such as JCU TRICHROM JTC series (manufactured by JCU CORPORATION), TOP FINE CHROME series (manufactured by Okuno Chemical Industries, Co., Ltd.), EARSUS CHROME series (manufactured by SurTec), TRICHROME series (manufactured by Atotech), and Envirochrome Process and Twilight Process (each manufactured by MacDermid Performance Solutions). The chromium plating layer generally has a silvery-white appearance. Alternatively, the chromium plating layer may be a black plating layer formed using a plating solution containing, for example, the blackening agent.

The trivalent chromium plating layer 5 may be formed under any suitable electroplating conditions, such as commonly used conditions. For example, the trivalent chromium plating layer 5 may be formed using a carbon or iridium oxide anode under conditions including a plating bath temperature of 30 to 60°C and a cathode current density of 5 to 20 A/dm².

As will be shown in the Examples section below, the chromium-plated part 1 can exhibit high corrosion resistance and good appearance regardless of the type and thickness of the trivalent chromium plating layer 5. Therefore, the trivalent chromium plating layer 5 may have any suitable thickness, such as a thickness of at least 0.05 µm (a common plating layer thickness for chromium-plated products) or a thickness of about 0.1 to about 1.0 µm**,** specifically a thickness of about 0.15 to about 0.50 µm.

### Electrolytic-chemical conversion and Immersion-chemical conversion

The chromium-plated part 1 preferably further includes an electrolytic-chemical conversion coating and/or an immersion-chemical conversion coating on the trivalent chromium plating layer 5. In this case, the chromium-plated part 1 may have further enhanced corrosion resistance. The surface of the trivalent chromium plating layer 5 may be subjected to any type of electrolytic-chemical conversion or immersion-chemical conversion, in which commonly used treatment methods may be used as desired. Examples of electrolytic-chemical conversion or immersion-chemical conversion include, but are not limited to, chromate treatment, wax treatment, treatment with a benzotriazole or triazine thiol solution, treatment with a solution of an amino or imino group-containing compound, and heat treatment. Such post-treatment can further enhance the corrosion resistance of the chromium-plated part or more effectively prevent discoloration, hydrogen embrittlement, or other damage.

### Chromate Treatment

The electrolytic-chemical conversion or the immersion-chemical conversion is preferably treatment with hexavalent chromium ions, which is more preferably what is called chromate treatment. Chromate treatment forms a chromate coating, which is self-restoring and thus can further enhance the corrosion resistance of the chromium-plated part 1.

For example, the chromate treatment includes a known electrolytic-chemical conversion or immersion-chemical conversion using hexavalent chromium ions from chromic anhydride, bichromates, or other sources. The electrolytic-chemical conversion may be performed by a commonly used method using a commercially available process or a commercially available treatment agent for such a process, such as EBACHRO-500 Process or EBACHRO-900 Process (manufactured by JCU CORPORATION). A treatment alternative to the chromate treatment may also be utilized, such as chemical treatment with trivalent chromium ions or chromium-free chemical conversion coating using phosphoric acid, permanganic acid, molybdenum, vanadium, iron, or any other metal.

### Chromium-Plated Part and Its Applications

Despite having the trivalent chromium plating layer 5 as an upper layer, the chromium-plated part 1 has high corrosion resistance and good appearance. For example, when evaluated by the CASS test (the corrosion resistance evaluation test according to JIS H 8502), the chromium-plated part 1 can provide a good evaluation result, such as a rating number (R.N.) of about 9 or more, typically 9.3 or more. Therefore, the chromium-plated part 1 can be used as various parts, such as automotive parts, outboard motor parts, faucet fittings, building material parts, and home appliance parts.

### Method for Manufacturing Chromium-Plated Part

As described above, the chromium-plated part 1 may be manufactured by a method including: forming the bright nickel plating layer 3 on the base 2 having the surface layer 22 including copper or a copper alloy; forming the noble-potential nickel plating layer 4 on the bright nickel plating layer 3, the noble-potential nickel plating layer 4 having an electric potential 30 to 180 mV higher than that of the bright nickel plating layer 3; and forming the trivalent chromium plating layer 5 on the noble-potential nickel plating layer 4.

Each of the steps of forming the bright nickel plating layer 3, the noble-potential nickel plating layer 4, and the trivalent chromium plating layer 5 may be performed using methods and conditions described above for each of the plating layers. As described above, the electrolytic-chemical conversion coating and/or the immersion conversion coating may be further formed on the surface of the trivalent chromium plating layer 5. By the manufacturing method described above, the chromium-plated part 1 can be manufactured with a smaller number of steps since it only has to form two nickel plating layers.

### EXAMPLES

Hereinafter, the present invention will be described in more detail with reference to examples, which are not intended to limit the present invention at all.

### Example 1

A chromium-plated part according to the present invention was produced as follows.

### Preparation of Base

The whole surface of an ABS resin molding (flat sheet-shaped) was etched with chromic acid. The etched molding was subjected to reduction treatment, catalization, and activation in a common manner, and then subjected to electroless nickel plating. The chromic acid etching was performed using a treatment solution containing 400 g/L of chromic anhydride, 400 g/L of sulfuric acid, and 10 g/L of trivalent chromium. The electroless nickel plating was performed at 40°C using ENILEX NI-5 Process (manufactured by JCU CORPORATION). Subsequently, the electroless plated product was subjected to electrolytic copper plating under the conditions of room temperature and 3 A/dm² using CU-BRITE EP-30 Process (manufactured by JCU CORPORATION) to form a base.

### Bright Nickel Plating

The resulting base was immersed in a bright nickel plating solution (shown below) under the conditions of 50°C, 3 A/dm², and 15 minutes so that a 6 µm-thick bright nickel plating layer was formed on the base.

### Bright Nickel Plating Solution

· Watts bath
   Nickel sulfate 260 g/L
   Nickel chloride 40 g/L
   Boric acid 40 g/L
· HI-BRITE #88 Process (manufactured by JCU CORPORATION)
   #810 (secondary brightening agent) 3 mL/L
   #82 (wetting agent) 2 mL/L
   #83 (primary brightening agent) 10 mL/L

### Noble-Potential Nickel Plating

Next, the nickel-plated base was immersed in a noble-potential nickel plating solution (shown below) under the conditions of 55°C, 3 A/dm², and 15 minutes so that a 6 µm-thick noble-potential nickel plating layer was formed on the bright nickel plating layer (the total thickness of the bright nickel plating layer and the noble-potential nickel plating layer was 12 µm**,** and the bright nickel plating layer thickness : the noble-potential nickel plating layer thickness ratio was 1:1). The plating solution contained a potential adjusting agent (ADDITIVE-E manufactured by JCU CORPORATION) at a concentration of 0.1 mL/L such that the electric potential difference from the bright nickel plating layer to the noble-potential nickel plating layer would be +45 mV. Noble-Potential Nickel Plating Solution
· Watts bath
   Nickel sulfate 260 g/L
   Nickel chloride 40 g/L
   Boric acid 40 g/L
· HI-BRITE #88 Process (manufactured by JCU CORPORATOIN)
   #810 (secondary brightening agent) 3 mL/L
   #82 (wetting agent) 2 mL/L
   #83 (primary brightening agent) 10 mL/L
· ADDITIVE-E 0.1 mL/L

### Trivalent Chromium Plating

The resulting nickel-plated base was then immersed in a trivalent chromium plating solution (shown below) under the conditions of 55°C, 10 A/dm², and 4 minutes so that a white trivalent chromium plating layer was formed in contact with the noble-potential nickel plating layer. The resulting chromium-plated part sample had a good appearance.

### Trivalent Chromium Plating Solution

· Basic chromium sulfate 19.5 g/L (chromium concentration 3 g/L)
· Malic acid 3 g/L
· Potassium sulfate 150 g/L
· Boric acid 70 g/L
·Saccharin 3 g/L
·3-Aminorhodanine 20 mg/L

The resulting chromium-plated part sample was evaluated for appearance, measured for layer thickness, and subjected to a corrosion resistance evaluation test. The test methods are as shown below. The test results are shown in Table 1 below.

### Measurement of Layer Thickness and Electric Potential Difference

The thickness of each of the nickel plating layers was measured from cross-sectional micrographs. The thickness of the chromium plating layer (Cr film thickness) was measured using a fluorescent X-ray analyzer (FT-150H manufactured by Hitachi High-Tech Science Corporation). The electric potential difference from the bright nickel plating layer to the noble-potential nickel plating layer was measured by the STEP test in accordance with ASTM B764: "Standard test method for simultaneous thickness and electrode potential determination of individual layers in multilayer nickel deposit". Before the measurement, an electrolytic solution (20°C) was prepared containing 300 g/L of NiCl₂·6H₂O, 50 g/L of NaCl, and 25 g/L of H₃BO₃. The sample (ready for electric potential difference measurement) was placed in the electrolytic solution and measured for electric potential difference using a multilayer nickel plating corrosion resistance meter (ED-3 manufactured by Chuo Seisakusho Ltd.) equipped with a silver-silver chloride reference electrode.

### Corrosion Resistance Evaluation

The corrosion resistance of the sample was evaluated using the CASS test in accordance with JIS H 8502. An aqueous solution containing 50±5 g/L of sodium chloride and 0.26±0.02 g/L of copper chloride (CuCl₂·2H₂O) and having a pH adjusted to 3.0 to 3.2 with acetic acid was sprayed on the sample under the conditions below. After 80 hours, the sample was determined for rating number (R.N.) (the samples of some of the examples shown below were also determined for R.N. after 40 hours and after 160 hours).
·Spray volume: 1.5±0.5 mL/80 cm²/h
·Temperature in the test chamber: 50±2°C
·Brine tank temperature: 50±2°C
·Air saturator temperature: 63±2°C
·Compressed air pressure: 70 to 167 kPa

### Example 2

A chromium-plated part sample was obtained using the same procedure as in Example 1. The surface layer of the chromium-plated part sample was then subjected to electrolytic chromate treatment. The electrolytic chromate treatment was performed under the conditions of 40°C, 0.1 A/dm², and 1 minute using EBACHRO-500 Process (a hexavalent chromium-based treatment solution containing 100 mL/L of ECR-500 manufactured by JCU CORPORATION). The resulting chromium-plated part sample had a good appearance. The sample was tested as in Example 1. The test results are shown in Table 1 below.

### Examples 3 to 7

Chromium-plated part samples were prepared using the same procedure as in Example 1 or 2 except that the concentration of ADDITIVE-E in the noble-potential nickel plating solution was varied between 0.1 and 2 mL/L and that the electric potential difference from the bright nickel plating layer to the noble-potential nickel plating layer was adjusted to +65 mV, +80 mV, or +160 mV. The resulting chromium-plated part samples all had a good appearance. The results of testing the samples are shown in Table 1 below.

### Comparative Example 1

A chromium-plated part sample was prepared using the same procedure as in Example 1 except that the noble-potential plating solution was replaced by a different plating solution with the composition below so that a nickel plating layer with a 95 mV-lower electric potential was formed directly on the bright nickel plating layer. The lower-potential nickel plating layer was formed under the conditions of 50°C, 3 A/dm², and 15 minutes. The resulting chromium-plated part sample was tested, and the test results are shown in Table 1 below. Lower-Potential Nickel Plating Solution
· Watts bath
   Nickel sulfate 260 g/L
   Nickel chloride 40 g/L
   Boric acid 40 g/L
· TRI-STRIKE Process (manufactured by JCU CORPORATION)
   TRI-STRIKE 5 mL/L
   #82 (wetting agent) 2 mL/L

### Comparative Example 2

A chromium-plated part sample was prepared using the same procedure as in Example 1 except that the noble-potential nickel plating solution did not contain ADDITIVE-E and the plating bath temperature was lowered to 52°C so that the electric potential difference from the bright nickel plating layer to the noble-potential nickel plating layer was adjusted to 5 mV. The resulting chromium-plated part sample was tested, and the test results are shown in Table 2 below.

### Comparative Example 3

A chromium-plated part sample having a three-layer nickel plating structure was prepared under the conditions below according to Patent Document 4 and evaluated as in Example 1.

### Semi-Bright Nickel Plating

A base was prepared as in Example 1 and then immersed in the semi-bright nickel plating solution below under the conditions of 55°C, 3 A/dm², and 15 minutes so that a semi-bright nickel plating layer was formed on the base. Semi-Bright Nickel Plating Solution
· Watts bath
   Nickel sulfate 260 g/L
   Nickel chloride 40 g/L
   Boric acid 40 g/L
·CF-24T Process (manufactured by JCU CORPORATION)
   CF-24T 1 mL/L
   #82-K (wetting agent) 1 mL/L

### Bright Nickel Plating

Next, the semi-bright nickel-plated base was immersed in the bright nickel plating solution below under the conditions of 50°C, 3 A/dm², and 12 minutes so that a bright nickel plating layer was formed on the semi-bright nickel plating layer. The bright nickel plating layer had an electric potential 145 mV lower than that of the underling semi-bright nickel plating layer.

### Bright Nickel Plating Solution

· Watts bath
   Nickel sulfate 260 g/L
   Nickel chloride 40 g/L
   Boric acid 40 g/L
· HI-BRITE #88 Process (manufactured by JCU CORPORATION)
   #810 (secondary brightening agent) 3 mL/L
   #82 (wetting agent) 2 mL/L
   #83 (primary brightening agent) 10 mL/L

### MP Nickel Plating

The bright nickel-plated base was then immersed in the MP nickel plating solution below under the conditions of 55°C, 3 A/dm², and 3 minutes so that an MP nickel plating layer was formed on the bright nickel plating layer. The MP nickel plating layer had an electric potential 55 mV higher than that of the underlying bright nickel plating layer.

### MP Nickel Plating Solution

· Watts bath
   Nickel sulfate 260 g/L
   Nickel chloride 40 g/L
   Boric acid 40 g/L
· MP-NI308 Process (manufactured by JCU CORPORATION)
   MP-303 10 mL/L
   MP-311 3 mL/L
   MP POWDER 308 3 g/L
   MP-308B 2 mL/L
   ADDITIVE-E 0.15 mL/L

### Preparation of Chromium-Plated Part Sample

Next, the MP nickel-plated product was subjected to trivalent chromium plating under the same conditions as in Example 1 to form a chromium-plated part sample, which was evaluated for the physical properties. The evaluation results are shown in Table 1 below.

### Comparative Example 4

A chromium-plated part sample was prepared having a bright nickel plating layer on the chromium plating layer side rather than on the base side. Specifically, the chromium-plated part sample was prepared by subjecting the base (prepared as in Example 1) to semi-bright nickel plating, bright nickel plating, and trivalent chromium plating in this order and then subjected to the physical property test. Each of the plating processes was performed under the same conditions as in Comparative Examples 1 and 3 except that the bright nickel plating was performed for 15 minutes. In the chromium-plated part sample of this comparative example, the bright nickel plating layer had an electric potential 145 mV lower than that of the underlying semi-bright nickel plating layer. The resulting chromium-plated part sample was tested, and the test results are shown in Table 1 below.

### Comparative Example 5

For reference, a hexavalent chromium-plated part sample was also prepared. The hexavalent chromium-plated part sample was prepared using the same procedure as in Comparative Example 1 except that the trivalent chromium plating was replaced by hexavalent chromium plating under the conditions of 42°C, 10 A/dm², and 3 minutes using the plating solution below. The resulting chromium-plated part sample was tested, and the test results are shown in Table 1 below.

### Hexavalent Chromium Plating Solution

· EBACHROM E-300LN Process (manufactured by JCU CORPORATION)
   Chromic acid 240 g/L
   Sulfuric acid 1 g/L
   ECR-300LN 10 mL/L
   MISTSHUT NP 0.1 mL/L

### Comparative Example 6

A chromium-plated part sample was prepared using the same procedure as in Example 5 except that the trivalent chromium plating was replaced by the same hexavalent chromium plating as in Comparative Example 5. The resulting chromium-plated part sample had an extremely poor appearance. Thus, no corrosion resistance evaluation was performed on the sample.

**[Table 1]**

| | Without chromate treatment | | | With chromate treatment | | |
|---|---|---|---|---|---|---|
| Electric potential difference* | Sample No. | Cr film thickness (µm) | CASS evaluation result (after 80h) | Sample No. | Cr film thickness (µm) | CASS evaluation result (after 80h) |
| -95 | Comparative Example 1 | 0.154 | 5.0 | - | - | - |
| +5 | Comparative Example 2 | 0.156 | 8.0 | - | - | - |
| +45 | Example 1 | 0.126 | 9.3 | Example 2 | 0.142 | 9.3 |
| +65 | Example 3 | 0.158 | 9.5 | Example 4 | 0.128 | 9.3 |
| +80 | Example 5 | 0.419 | 9.5 | - | - | - |
| +160 | Example 6 | 0.119 | 9.5 | Example 7 | 0.096 | 9.5 |
| @ | Comparative Example 3 | 0.187 | 8.0 | (Three-layer nickel plating) | | |
| -145^{#} | Comparative Example 4 | 0.107 | 5.0 | (The bright nickel plating layer lies on the outer side) | | |
| -95 | Comparative Example 5 | 0.152 | 6.0 | (Hexavalent chromium plating) | | |
| +80 | Comparative Example 6 | 0.190 | Poor appearance | (Hexavalent chromium plating) | | |

| | | | | | | |
|---|---|---|---|---|---|---|
| * Electric potential difference (mV) from bright nickel plating layer to upper nickel plating layer @ Electric potential difference from central bright nickel plating layer: lower layer +145 mV, upper layer +55 mV # Electric potential difference (mV) from lower (semi-bright) to upper (bright) nickel plating layer | | | | | | |

The chromium-plated part samples of Examples 1 to 7, in which the electric potential difference from the lower bright nickel plating layer to the upper noble-potential nickel plating layer was in the range of +30 to +180 mV according to the present invention, all exhibited a rating number (R.N.) of at least 9.3 in the CASS test, which means high corrosion resistance. These R.N. values are significantly higher than those of Comparative Examples 1 and 2, in which the electric potential difference between the two nickel plating layers is outside the scope of the present invention, and are significantly much higher than that of the sample of Comparative Example 1, in which the upper nickel plating layer had a lower electric potential. The results show that the specified electric potential difference is effective in improving the corrosion resistance.

The R.N. values of Examples 1 to 7 were also higher than those of Comparative Example 3 (with a three-layer nickel plating structure according Patent Document 4) and Comparative Example 5 (with a hexavalent chromium plating layer). The samples of the examples without chromate treatment also exhibited a R.N. as high as that of the sample having undergone chromate treatment. It has been found that despite having one less nickel plating step than the conventional nickel-chromium plating process, the process of the present invention enables the production of chromium-plated parts with high corrosion resistance and good appearance without using hexavalent chromium-based chemicals.

The samples of Examples 1 to 7 according to the present invention also exhibited significantly better corrosion resistance than the sample of Comparative Example 4, which had a semi-bright nickel plating layer on the base side and a bright nickel plating layer on the chromium plating layer side. This shows that it is important to form the bright nickel plating layer in contact with the surface of the base. Notably, the sample of Example 5, having a chromium plating layer thickness more than twice of the thickness of other examples, had a similar level of R.N. to that of other examples. This suggests that the chromium-plated part of the present invention may exhibit high corrosion resistance regardless of the thickness of the trivalent chromium plating layer.

Notably, despite having a nickel film thickness of 12 µm**,** the chromium-plated part according to the present invention exhibited a high R.N. of at least 9.3, which is equal to or higher than that of chromium-plated parts with a nickel film thickness of 25 µm shown below. The fact that the nickel film with such a half thickness or less can provide a similar level of corrosion resistance shows that the present invention can improve corrosion resistance without using an increased amount of nickel. This means that the manufacturing method of the present invention can contribute to a reduction in the usage of nickel and thus allow the nickel plating process to be completed in a shorter time at a lower cost.

### Examples 8 to 43

Chromium-plated part samples were prepared using the same procedures as in Example 1 or 2 (with a nickel film thickness of 12 µm in all cases) except that the concentration of ADDITIVE-E in the noble-potential nickel plating solution was varied between 0.1 and 2 mL/L for adjustment of the electric potential difference between the two nickel plating layers to different values and that the bright nickel plating time and the noble-potential nickel plating time were varied between 1 to 29 minutes and between 1 to 29 minutes, respectively, for formation of the nickel plating layers with different thicknesses. In this regard, the measurement from cross-sectional micrographs (described above) was used to confirm that the plating time correlated with the thickness of each resulting nickel plating layer. The resulting chromium-plated part samples all had a good appearance. The results of testing the samples are shown in Table 2 together with those of Comparative Examples 1 and 2.

**[Table 2]**

| | | Without chromate treatment | | | With chromate treatment | | |
|---|---|---|---|---|---|---|---|
| Electric potential difference¹⁾ | Thickness ratio²⁾⁾ | Sample No. | Cr film thickness (µm) | CASS evaluation result (after 80h) | Sample No. | Cr film thickness (µm) | CASS evaluation result (after 80h) |
| -95 | 1:1 | Comparative Example 1 | 0.154 | 5.0 | - | - | - |
| +5 | 1:1 | Comparative Example 2 | 0.156 | 8.0 | - | - | - |
| +35 | 1:29 | - | - | - | Example 8 | 0.092 | 9.0 |
| | 3:1 | - | - | - | Example 9 | 0.113 | 9.3 |
| | 9:1 | - | - | - | Example 10 | 0.071 | 9.3 |
| | 29:1 | - | - | - | Example 11 | 0.131 | 9.0 |
| +45 | 1:3 | Example 12 | 0.097 | 9.3 | Example 13 | 0.092 | 9.3 |
| | 1:2 | Example 14 | 0.087 | 9.3 | Example 15 | 0.074 | 9.5 |
| | 1:1 | Example 1 | 0.126 | 9.3 | Example 2 | 0.142 | 9.3 |
| | 2:1 | Example 16 | 0.084 | 9.5 | Example 17 | 0.128 | 9.3 |
| | 3:1 | Example 18 | 0.085 | 9.3 | Example 19 | 0.127 | 9.0 |
| | 4:1 | Example 20 | 0.142 | 9.0 | Example 21 | 0.146 | 9.3 |
| | 5:1 | Example 22 | 0.128 | 9.0 | Example 23 | 0.144 | 9.3 |
| +65 | 1:3 | Example 24 | 0.130 | 9.5 | Example 25 | 0.110 | 9.5 |
| | 1:1 | Example 3 | 0.158 | 9.5 | Example 4 | 0.128 | 9.3 |
| | 5:1 | Example 26 | 0.168 | 9.5 | Example 27 | 0.145 | 9.5 |
| +80 | 1:1 | Example 5 | 0.419 | 9.5 | - | - | - |
| +120 | 1:29 | - | - | - | Example 28 | 0.120 | 9.5 |
| | 3:1 | - | - | - | Example 29 | 0.117 | 9.8 |
| | 9:1 | - | - | - | Example 30 | 0.064 | 9.5 |
| | 29:1 | - | - | - | Example 31 | 0.107 | 9.3 |
| +160 | 1:3 | Example 32 | 0.082 | 9.5 | Example 33 | 0.135 | 9.5 |
| | 1:2 | Example 34 | 0.097 | 9.5 | Example 35 | 0.083 | 9.5 |
| | 1:1 | Example 6 | 0.119 | 9.5 | Example 7 | 0.096 | 9.5 |
| | 2:1 | Example 36 | 0.084 | 9.5 | Example 37 | 0.125 | 9.8 |
| | 3:1 | Example 38 | 0.080 | 9.8 | Example 39 | 0.103 | 9.8 |
| | 4:1 | Example 40 | 0.105 | 9.8 | Example 41 | 0.143 | 9.8 |
| | 5:1 | Example 42 | 0.108 | 9.8 | Example 43 | 0.129 | 9.8 |

| | | | | | | | |
|---|---|---|---|---|---|---|---|
| 1) Electric potential difference (mV) from bright to upper nickel plating layer 2) Thickness ratio between nickel plating layers (the underlined bold value is the thickness proportion of bright nickel plating) | | | | | | | |

The samples of Examples 1 to 43 according to the present invention, in which the noble-potential nickel plating layer (upper nickel plating layer) had an electric potential 35 to 160 mV higher than that of the bright nickel plating layer (lower nickel plating layer), all exhibited a R.N. of at least 9.0 in the CASS test, which means high corrosion resistance. Notably, the samples with an electric potential difference between the two nickel plating layers of at least +65 mV exhibited a R.N. of at least about 9.5, which means very high corrosion resistance.

Furthermore, the samples of Examples 5 and 30 with greatly different chromium plating layer thicknesses both exhibited good appearance and high corrosion resistance. It has been suggested again that the chromium-plated part according to the present invention may exhibit high corrosion resistance regardless of the thickness of the trivalent chromium plating layer. The results of Examples 8 to 11 and Examples 28 to 31 suggest that if the thickness ratio between the two nickel plating layers is more equable than 9:1 (close to 1:1), the chromium-plated part sample may have a higher R.N.

### Examples 44 to 71

The electric potential difference between the two nickel plating layers was adjusted to +65 mV, and the nickel film thickness was adjusted to 12 µm. Under these conditions, it was investigated how the thickness ratio affected the corrosion resistance. Chromium-plated part samples were prepared using the same procedure as in Example 3 or 4 except that the bright nickel plating time and the noble-potential nickel plating time were varied between 1 to 29 minutes and between 1 to 29 minutes, respectively, for formation of the nickel plating layers with different thickness ratios. The CASS test was carried out for 40, 80, or 160 hours. The measurement from cross-sectional micrographs (described above) was used to confirm that the plating time correlated with the thickness of each resulting nickel plating layer. The resulting chromium-plated part samples all had a good appearance. The results of testing the samples are shown in Table 3 together with the results of Example 3 and Comparative Example 3.

**[Table 3]**

| | Without chromate treatment | | | | | With chromate treatment | | | | |
|---|---|---|---|---|---|---|---|---|---|---|
| Thickness ratio* | Sample No. | Cr film thickness (µm) | CASS evaluation result | | | Sample No. | Cr film thickness (µm) | CASS evaluation result | | |
| | | | 40h | 80h | 160h | | | 40h | 80h | 160h |
| 1:29 | Example 44 | 0.149 | 9.3 | 9.0 | 8.0 | Example 45 | 0.128 | 9.8 | 9.0 | 8.0 |
| 1:14 | Example 46 | 0.143 | 9.3 | 9.0 | 8.0 | Example 47 | 0.132 | 9.8 | 9.0 | 9.0 |
| 1:9 | Example 48 | 0.134 | 9.0 | 9.0 | 8.0 | Example 49 | 0.140 | 9.8 | 9.0 | 8.0 |
| 1:5 | Example 50 | 0.157 | 9.3 | 9.0 | 9.0 | Example 51 | 0.148 | 9.8 | 9.3 | 8.0 |
| 1:4 | Example 52 | 0.138 | 9.3 | 9.0 | 8.0 | Example 53 | 0.115 | 9.8 | 9.3 | 8.0 |
| 1:3 | Example 24 | 0.130 | 9.5 | 9.5 | 8.0 | Example 25 | 0.110 | 9.8 | 9.5 | 9.0 |
| 1:2 | Example 54 | 0.146 | 9.3 | 9.3 | 9.0 | Example 55 | 0.140 | 9.8 | 9.5 | 9.0 |
| 1:1 | Example 3 | 0.158 | 9.3 | 9.5 | 9.0 | Example 4 | 0.128 | 9.8 | 9.3 | 9.0 |
| 2:1 | Example 56 | 0.134 | 9.3 | 9.3 | 9.0 | Example 57 | 0.150 | 9.8 | 9.8 | 9.3 |
| 3:1 | Example 58 | 0.134 | 9.5 | 9.5 | 9.3 | Example 59 | 0.114 | 9.8 | 9.8 | 9.5 |
| 4:1 | Example 60 | 0.111 | 9.5 | 9.5 | 9.0 | Example 61 | 0.128 | 9.8 | 9.8 | 9.5 |
| 5:1 | Example 26 | 0.168 | 9.3 | 9.5 | 9.0 | Example 27 | 0.145 | 9.8 | 9.5 | 9.3 |
| 6:1 | Example 62 | 0.167 | 9.5 | 9.3 | 9.0 | Example 63 | 0.174 | 9.8 | 9.5 | 9.0 |
| 7:1 | Example 64 | 0.140 | 9.5 | 9.3 | 9.0 | Example 65 | 0.123 | 9.8 | 9.5 | 9.0 |
| 9:1 | Example 66 | 0.109 | 9.3 | 9.0 | 8.0 | Example 67 | 0.110 | 9.8 | 9.3 | 8.0 |
| 14:1 | Example 68 | 0.087 | 9.3 | 9.0 | 7.0 | Example 69 | 0.088 | 9.8 | 8.0 | 7.0 |
| 29:1 | Example 70 | 0.085 | 9.0 | 8.0 | 7.0 | Example 71 | 0.122 | 9.8 | 9.0 | : 7.0 |
| 5:4:1^{@} | Comparative Example 3 | 0.187 | - | 8.0 | - | (Three-layer nickel plating) | | | | |

| | | | | | | | | | | |
|---|---|---|---|---|---|---|---|---|---|---|
| * Thickness ratio between nickel plating layers (the underlined bold value is the thickness proportion of bright nickel plating) @ Semi-bright : bright : MP nickel plating layer thickness ratio Electric potential difference from central bright nickel plating layer: lower layer +145 mV, upper layer +55 mV | | | | | | | | | | |

The chromium-plated part samples of these examples all exhibited R.N. values equal to or higher than that of the sample of Comparative Example 3 with a three-layer nickel plating structure. This means that, despite having a two-layer nickel plating structure (which can be formed by a less complicated process), the part samples of these examples had better corrosion resistance. Among these samples, some with a thickness ratio of the bright nickel plating layer to the noble-potential nickel plating layer of 1:29 to 9:1, in particular 1:5 to 9:1, exhibited, after 80 hours, a R.N. of at least 9.0 without chromate treatment or a R.N. of at least 9.3 after chromate treatment, which means high corrosion resistance. In particular, the samples with the thickness ratio falling within the range of 1:3 to 5:1 exhibited, after 80 hours, a R.N. of about 9.5 or more, which means very high corrosion resistance.

### Examples 72 to 81

Chromium-plated part samples were prepared using the same procedure as in Example 3 or 4 except that the bright nickel plating layer and the noble-potential nickel plating layer were formed with a total thickness of 25 µm (the electric potential difference between the two nickel plating layers was 65 mV). The resulting chromium-plated part samples all had a good appearance. The results of testing the samples are shown in Table 4 below.

### Comparative Examples 7 to 10

Chromium-plated part samples were prepared using the same procedure as in Comparative Example 3 except that the nickel plating layers were formed with a total thickness of 25 µm and that the electric potential difference from the bright nickel plating layer to the MP nickel plating layer was +30 mV or +70 mV. The samples of Comparative Examples 8 and 10 further underwent chromate treatment as in Example 4. The resulting samples were tested, and the test results are shown in Table 4 below.

### Comparative Example 11

A chromium-plated part sample was prepared using the same procedure as in Comparative Example 7 except that the trivalent chromium plating was replaced by hexavalent chromium plating. The hexavalent chromium plating was performed as in Comparative Example 5. The resulting sample was tested, and the test results are shown in Table 4.

**[Table 4]**

| | Without chromate treatment | | | With chromate treatment | | |
|---|---|---|---|---|---|---|
| Thickness ratio* | Sample No. | Cr film thickness (µm) | CASS evaluation result (after 80h) | Sample No. | Cr film thickness (µm) | CASS evaluation result (after 80h) |
| 1:29 | Example 72 | 0.193 | 9.5 | Example 73 | 0.199 | 9.3 |
| 1:3 | Example 74 | 0.177 | 9.5 | Example 75 | 0.169 | 9.0 |
| 1:1 | Example 76 | 0.152 | 9.3 | Example 77 | 0.184 | 9.3 |
| 3:1 | Example 78 | 0.182 | 9.3 | Example 79 | 0.189 | 9.3 |
| 29:1 | Example 80 | 0.180 | 9.0 | Example 81 | 0.209 | 9.0 |
| 9:6:1^{#} | **Comparative** Example 7 ^{#1} | 0.125 | 9.0 | Comparative Example 8 ^{#1} | 0.114 | 9.0 |
| 9:6:1^{#} | Comparative Example 9 ^{#2} | 0.087 | 9.0 | Comparative Example 10 ^{#2} | 0.102 | 9.5 |
| 9:6:1^{#} | Comparative Example 11 ^{#1} | 0.152 | 9.0 | (Hexavalent chromium plating) | | |

| | | | | | | |
|---|---|---|---|---|---|---|
| * Thickness ratio between nickel plating layers (the underlined bold value is the thickness proportion of bright nickel plating) # Semi-bright : bright : MP nickel plating layer thickness ratio Electric potential difference from central bright nickel plating layer: #1 lower layer +145 mV, upper layer +30 mV; #2 lower layer +145 mV, upper layer +70 mV | | | | | | |

The chromium-plated part samples of Examples 72 to 81 according to the present invention all exhibited a R.N. of at least 9.0 in the CASS test, which means a similar or higher level of corrosion resistance as compared to that of the samples of Comparative Examples 7 to 11 with a three-layer nickel plating structure. In particular, the chromium-plated part samples with a thickness ratio of the bright nickel plating layer to the noble-potential nickel plating layer of 1:29 to 3:1 and without undergoing chromate treatment exhibited a R.N. of at least 9.3, which means very high corrosion resistance.

### Examples 82 and 83

Chromium-plated part samples were prepared using the same procedure as in Example 5 except that the white trivalent chromium plating was replaced by black trivalent chromium plating. The black trivalent chromium plating was performed under the conditions of 40°C, 10 A/dm², and 3 minutes using the black trivalent chromium plating solution below, in which the sample was immersed. The resulting chromium-plated part samples had a good appearance. The resulting samples were tested, and the test results are shown in Table 5 below. Black Trivalent Chromium Plating Solution
·JTC-BK Process (manufactured by JCU CORPORATION)
   JTC-CR2 130 g/L
   JTC-BK-S 300 g/L
   JTC-A 90 mL/L
   JTC-BK-B 20 mL/L
   JTC-BK-C 20 mL/L
   JTC-WA 2 mL/L

### Comparative Examples 12 and 13

Chromium-plated part samples were prepared using the same procedure as in Comparative Example 7 or 8 except that the chromium plating was black trivalent chromium plating and that the electric potential difference from the bright nickel plating layer to the MP nickel plating layer was +35 mV. The black trivalent chromium plating was performed as in Example 82 or 83. The resulting samples were tested, and the test results are shown in Table 5.

**[Table 5]**

| | Without chromate treatment | | | | With chromate treatment | | | |
|---|---|---|---|---|---|---|---|---|
| Thickness ratio* | Sample No. | Cr film thickness (µm) | CASS evaluation result | | Sample No. | Cr film thickness (µm) | CASS evaluation result | |
| | | | 80h | 160h | | | 80h | 160h |
| 1:1 | Example 82 | 0.185 | 9.8 | 9.3 | Example 83 | 0.180 | 9.8 | 9.5 |
| 9:6:1# | Comparative Example 12 | 0.207 | 9.0 | 8.0 | Comparative Example 13 | 0.203 | 9.5 | 9.0 |

| | | | | | | | | |
|---|---|---|---|---|---|---|---|---|
| * Thickness ratio between nickel plating layers (the underlined bold value is the thickness proportion of bright nickel plating) # Semi-bright : bright : MP nickel plating layer thickness ratio Electric potential difference from central bright nickel plating layer: lower layer +145 mV, upper layer +35 mV | | | | | | | | |

The chromium-plated part samples of Examples 82 and 83 according to the present invention exhibited a higher level of corrosion resistance than that of the sample of Comparative Example 12 or 13 with a three-layer nickel plating structure. The present invention has been found to be advantageous regardless of whether the trivalent chromium plating layer is a white or black trivalent chromium plating layer or any other type.

The above examples show that despite having a trivalent chromium plating layer as an upper layer, chromium-plated parts produced according to the present invention exhibit high corrosion resistance and good appearance and that such chromium-plated parts can be produced by a more simplified process according to the present invention.

### EXPLANATION OF REFERENCE NUMERALS

1: Chromium-plated part
2: Base
2A: Surface of base
3: Bright nickel plating layer
4: Noble-potential nickel plating layer
5: Trivalent chromium plating layer
21: Substrate
22: Surface layer

## Claims

1. A chromium-plated part comprising:
a base having a surface layer comprising copper or a copper alloy;
a bright nickel plating layer formed on the surface layer of the base;
a noble-potential nickel plating layer formed on the bright nickel plating layer and having an electric potential 30 to 180 mV higher than that of the bright nickel plating layer; and
a trivalent chromium plating layer formed on the noble-potential nickel plating layer.

2. The chromium-plated part according to claim 1, wherein the chromium-plated part has a thickness ratio of the bright nickel plating layer to the noble-potential nickel plating layer of 1:30 to 10:1.

3. The chromium-plated part according to claim 1, wherein the chromium-plated part has a thickness ratio of the bright nickel plating layer to the noble-potential nickel plating layer of 1:5 to 9:1.

4. The chromium-plated part according to claim 1, wherein the bright nickel plating layer and the noble-potential nickel plating layer have a total thickness of 1 to 30 µm.

5. The chromium-plated part according to claim 1, further comprising an electrolytic-chemical conversion coating and/or an immersion-chemical conversion coating on the trivalent chromium plating layer.

6. The chromium-plated part according to claim 1, wherein the noble-potential nickel plating layer is free of non-conductive fine particles.

7. The chromium-plated part according to claim **1,** wherein the base is a substrate comprising one or more materials selected from the group consisting of a resin, a ceramic, and a metal, with the surface layer comprising copper or a copper alloy, or a substrate comprising copper or a copper alloy.

8. A method for manufacturing a chromium-plated part, the method comprising:
forming a bright nickel plating layer on a surface layer of a base, the surface layer comprising copper or a copper alloy;
forming a noble-potential nickel plating layer on the bright nickel plating layer, the noble-potential nickel plating layer having an electric potential 30 to 180 mV higher than that of the bright nickel plating layer; and
forming a trivalent chromium plating layer on the noble-potential nickel plating layer.

9. The method according to claim 8, further comprising forming an electrolytic-chemical conversion coating and/or an immersion-chemical conversion coating on a surface of the trivalent chromium plating layer.
